# EUROPEAN PATENT SPECIFICATION

(11) **EP 1 922 208 B1**
(45) Date of publication and mention of the grant of the patent: **19.09.2012**
(21) Application number: 06762246.4
(22) Date of filing: 28.06.2006
(51) Int. Cl.: B29C 69/02

(54) **Method for producing an alveolar panel element particularly for coverings, packagings, supporting surfaces**
Verfahren zur Herstellung eines Alveolarplattenelements, insbesondere für Abdeckungen, Verpackungen, Stützflächen
Procede de fabrication d' un element de panneau alveolaire, notamment pour revetements, emballages, surfaces porteuses

(30) Priority: 04.07.2005 IT MI20051263
(43) Date of publication of application: 21.05.2008
(73) Proprietor: De Maria, Massimo, 21040 Oggiona con Santo Stefano (IT)
(72) Inventor: De Maria, Massimo, 21040 Oggiona con Santo Stefano (IT)
(74) Representative: Modiano, Micaela Nadia
(86) International application number: PCT/EP2006/006263
(87) International publication number: WO 2007/003321

(56) References cited:
- EP-A- 1 491 327
- FR-A- 2 218 989
- FR-A- 2 269 418
- FR-A- 2 871 164
- GB-A- 971 159
- US-A- 3 294 387

## Description

### Technical Field

The present invention relates to a method for producing an alveolar panel element particularly for coverings, packagings, supporting surfaces, and to the alveolar panel element produced thereby.

### Background Art

As is known, panel elements are already commercially available which are obtained by means of an extruded component made of plastic material, which is shaped like cardboard and is substantially constituted by two mutually spaced sheets joined by thin walls, which delimit a plurality of channels.

Such panel element has good rigidity along the longitudinal direction of the channels but is relatively flexible at right angles thereto, since there are no reinforcement elements that act in that direction.

In order to have a panel element that is capable of having substantially equal strength in both directions, layered panel elements are currently used which are constituted generally by a first outer layer and a second outer layer, which are combined with an internal layer having an alveolar configuration of various kinds, so as to obtain an alveolar panel element which, while having adequate lightness, is capable of offering good rigidity.

However, this embodiment suffers various drawbacks, the first of which consists in that it is necessary to join three separate elements and moreover it is not infrequent for the layers to separate from each other, thus interrupting the monolithic configuration and strength of the resulting panel element.

EP-A-1 491 327 discloses as hollow structure plate manufactured by forming truncated cone protrusions in a pair of sheet elements that are then mutally joined at the flat bottoms of such truncated cone protrusions.

FR-A-2 269 418 discloses light plastic panel formed by two sheets having protruding elements joined in a criss-cross pattern.

GB 971 159 A discloses a thermoplastic beverage container formed by a sheet material with a smooth base portion having a plurality of projections to which a further flat sheet is connected.

### Disclosure of the Invention

The aim of the invention is to provide an alveolar panel element particularly for coverings, packagings, supporting surfaces and the like that allows to have optimum strength both in a longitudinal direction and in a transverse direction, being provided in practice as a monolithic element.

Within this aim, an object of the invention is to provide a method that allows to obtain the alveolar panel element starting substantially from a traditional extrusion process, which allows to adjust at will the dimensional features of the panel element that is obtained.

Another object of the present invention is to provide a method which, thanks to its particular characteristics, is capable of giving the greatest assurances of reliability and safety in use.

Another object of the present invention is to provide a method that can be carried out starting from commonly commercially available elements and materials and is further competitive from a merely economical standpoint.

In accordance with the invention, there is provided a method for producing an alveolar panel element as defined in the appended claim 1.

### Brief Description of the Drawings

Further characteristics and advantages of the present invention will become better apparent from the description of a preferred but not exclusive embodiment of a method for manufacturing an alveolar panel element particularly for coverings, packagings, supporting surfaces and the like, illustrated by way of non-limiting example in the accompanying drawings, wherein:

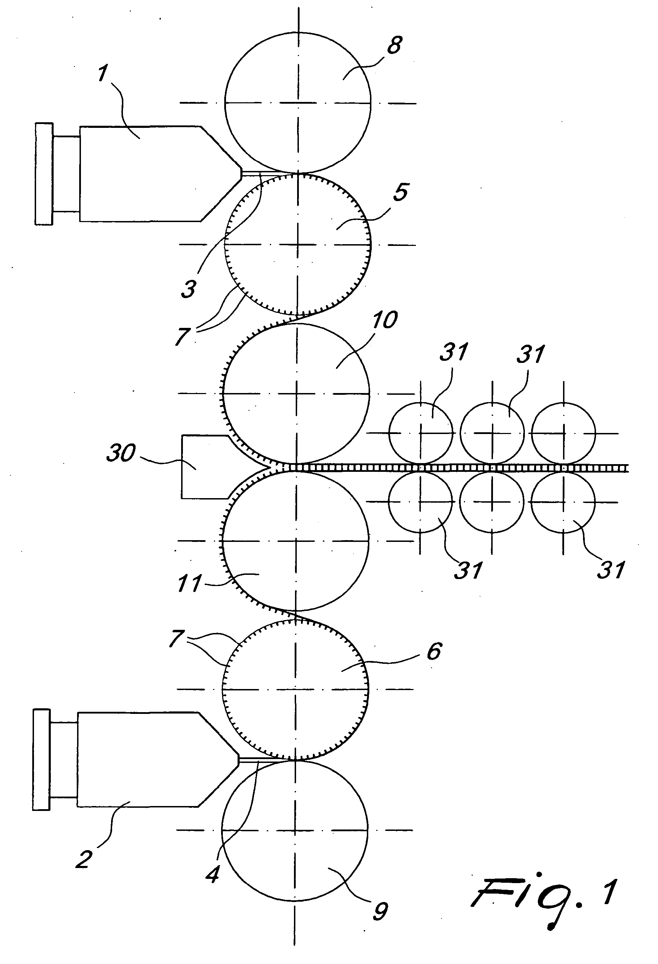

Figure 1 is a schematic view of the machine for providing a panel element according to the invention;

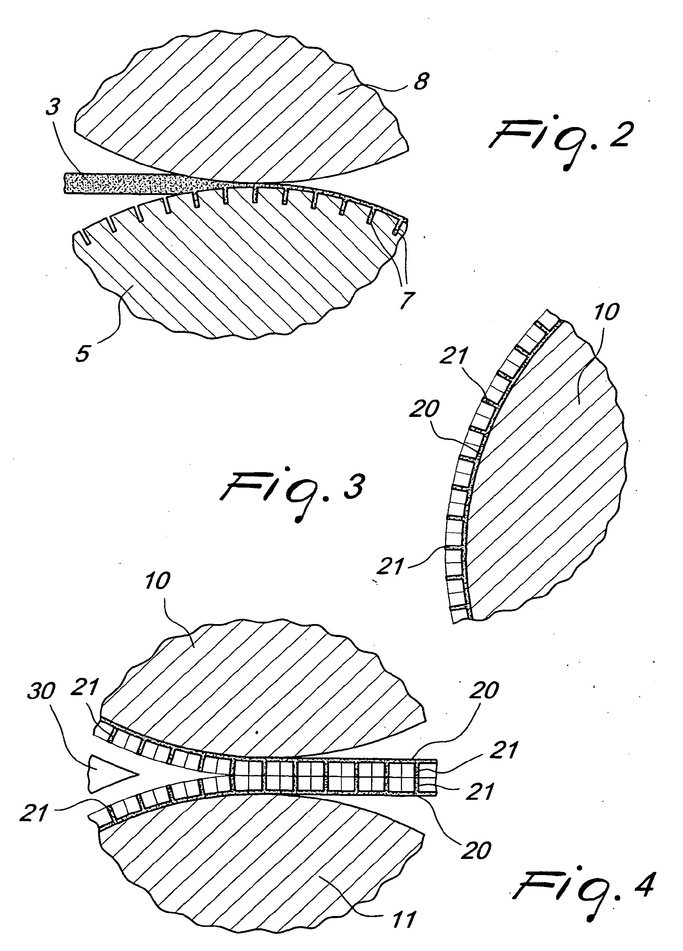

Figure 2 is a view of a detail of the extruded layer that is shaped;
Figure 3 is a view of the step for cooling the shaped layer;
Figure 4 is a view of the step for coupling the two layers provided with protruding elements on one face;
Figure 5 is a schematic perspective view of a layer with honeycomb protruding elements;
Figure 6 is a schematic perspective view of the alveolar panel element obtained by coupling the two layers;
Figure 7 is a sectional view, taken along the line VII-VII of Figure 6;
Figure 8 is a schematic perspective view of a layer with rhomboidal protruding elements;
Figure 9 is a view or a layer with protruding elements that delimit cylindrical cavities.

### Ways of carrying out the Invention

With reference to the figures, the method for providing an alveolar panel element particularly for coverings, packagings, supporting surfaces and the like, according to the invention, entails using a first extruder head 1 and a second extruder head 2 to obtain respectively a first layer 3 and a second layer 4 made of thermoplastic material, which can be constituted by high-density polyethylene, polypropylene and the like.

Each extruded layer 3 and 4 is applied to a respective shaping roller 5 and 6, which has on its surface recesses, designated by the reference numeral 7 for both rollers, which match the pattern of the protruding elements to be obtained.

To perform the shaping, there is respectively a first contrast roller 8 and a second contrast roller 9, which in practice shape the extruded layer by introducing it in the cavities provided in the shaping rollers 5 and 6 and, by varying their mutual distance, adjust the thickness of the sheet-like element on which the protruding elements are provided.

As is usual in these shaping processes, the rollers 5 and 6 are kept at a preset temperature so as to be able to extract the shaped layer with coupling onto corresponding finishing rollers, designated by the reference numerals 10 and 11, which in practice engage a face of the shaped layer, on the opposite side with respect to the protruding elements.

The layer is shaped so as to form a sheet-like element, designated by the reference numeral 20, from which protruding elements 21 protrude on at least one face; in a preferred embodiment, such protruding elements form a cavity which is closed perimetrically and open at the face that lies opposite the bottom.

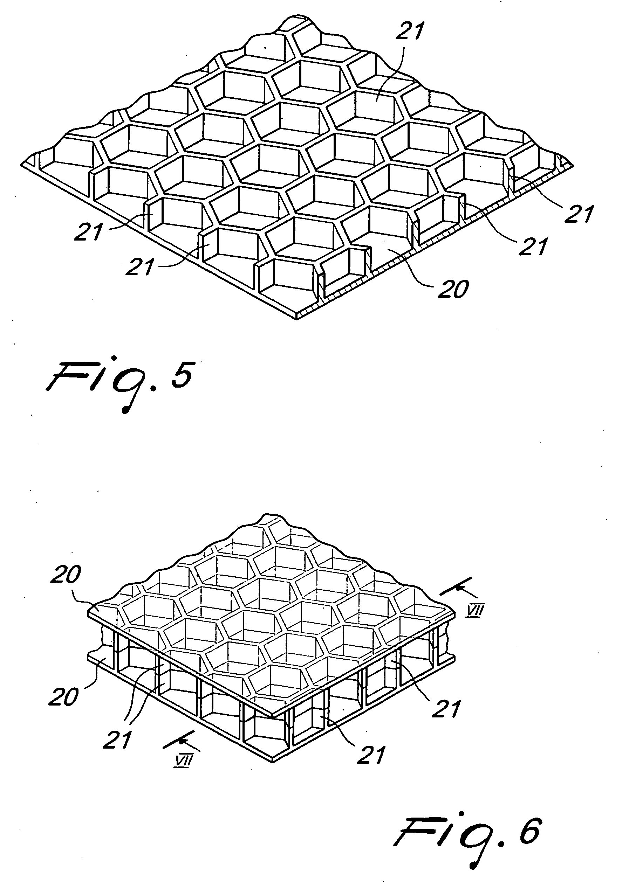

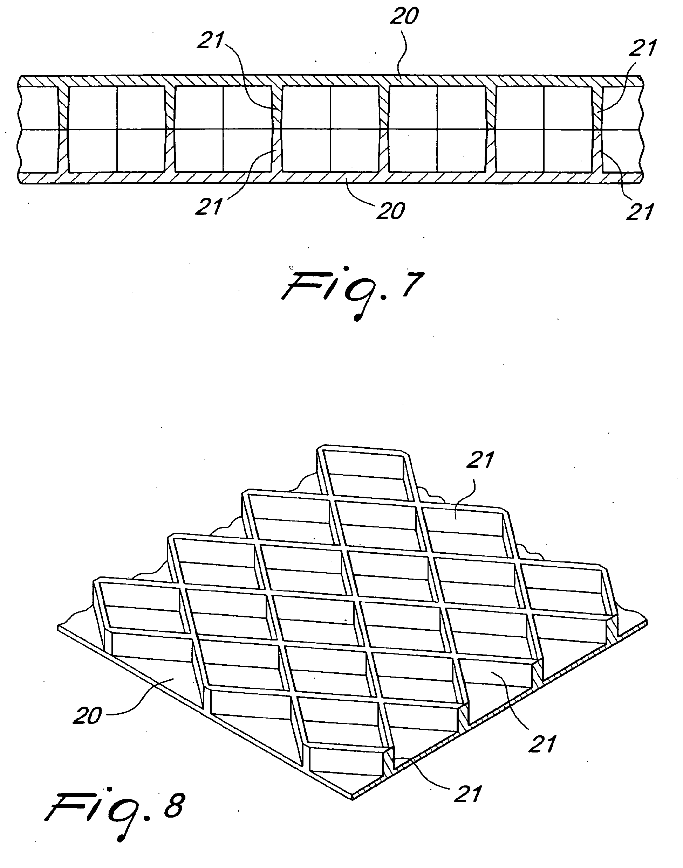

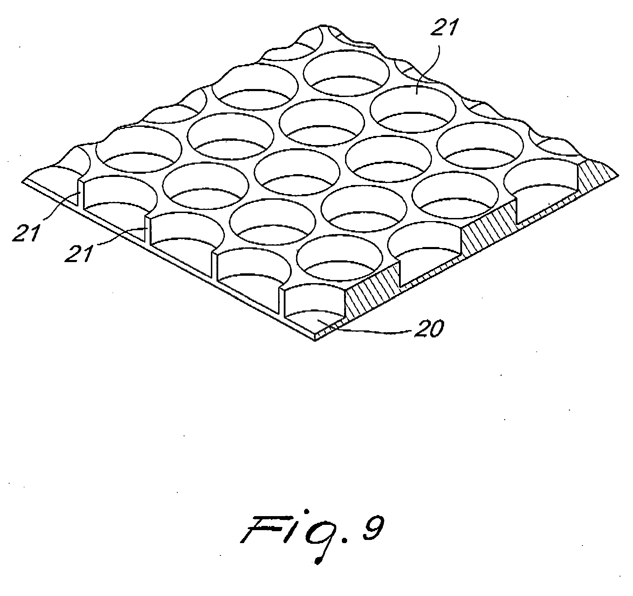

According to what is shown in Figures 5 to 7, the cavity has a hexagonal shape, of the honeycomb type; likewise, in Figure 8 there are elements, again designated by the reference numeral 21, which form rhomboidal or otherwise polygonal cavities formed by straight walls or optionally, as shown in Figure 9, the protruding elements have variable dimensions and delimit together cylindrical cavities which have a circular base.

In practice, the finishing rollers 10 and 11 engage the smooth face, cooling it, and are mutually opposite so as to provide the coupling of the protruding elements that are in practice joined each other.

According to a preferred but not exclusive embodiment, a heating unit 30, for example a blower, is arranged at the coupling region of the first and second layers and allows to soften the end regions of the elements 21, which advantageously have a frustum-shaped cross-section which is wider on the side of the sheet-like element 20, so as to facilitate the step of extraction from the shaping rollers 5 and 6.

The two layers, again designated by the reference numerals 3 and 4, are arranged in step, and are preferably identical so as to couple correspondingly the protruding elements, which by being melted in localized positions fuse, since they are made of the same thermoplastic material, obtaining a coupling that in practice allows to provide closed cells in order to obtain a monolithic alveolar panel element, in which the two layers are coupled thanks to the presence of a train of coupling and calibration rollers, designated by the reference numeral 31, which keep the two layers mutually positioned after their passage through the finishing rollers 10 and 11, which engage with their smooth faces and allow the coupling of the free ends of the protruding elements.

With the arrangement described above, it is possible to obtain, for the alveolar panel element, a modulus of elasticity that is equal both in a longitudinal direction and in a transverse direction, and it is possible to provide panel elements with a thickness that can range from 3 to 20 mm.

Depending on the different required characteristics, it is possible to change the weight per square meter by changing the thickness of the protruding elements and/or by changing the thickness of the sheet-like element, and therefore it is possible to adapt easily to the various requirements.

Advantageously, the weight per square meter of the resulting panel element ranges preferably from 0.3 to 0.4 kg/m², with the possibility to increase the weight even to 0.6 kg/ m².

Moreover, it is possible to apply to the outer surface of the layer 20 an external finishing layer, which can have any shape.

From what has been described above it is therefore evident that the invention achieves the proposed aim and objects, and in particular the fact is stressed that an alveolar element is obtained by coupling just two separate layers which fuse stably together, obtaining a monolithic element.

The invention thus conceived is susceptible of numerous modifications and variations, all of which are within the scope of the appended claims.

Thus, for example, at the time of the coupling between the first layer and the second layer it is possible to provide, if required by particular structural reasons, for the interposition of an intermediate layer, which can be constituted by a net or optionally by a continuous layer which is compatible with the thermoplastic material of the two layers, so as to achieve stable and monolithic coupling.

All the details may further be replaced with other technically equivalent elements.

In practice, the materials used, as well as the contingent shapes and dimensions, may be any according to requirements.

## Claims

1. A method for producing an alveolar panel element particularly for coverings, packagings, supporting surfaces and the like, comprising the steps of:
- simultaneously extruding a first layer (3) and a second layer (4) of thermoplastic material,
- simultaneously shaping said first and second layers (3,4) by positioning said first and second layers (3,4) on respective shaping rollers (5,6) each provided on its surface with recesses so as to provide, on each layer (3,4), a flat sheet-like element (20) with elements (21) that protrude on one face thereof, and wherein said recesses (7) correspond to the pattern of said protruding elements (21),
***characterized by***
- contrast rollers (8,9) being provided for shaping, and
- wherein said protruding elements (21) form cavities which are closed perimetrically and are open at the face that lies opposite the bottom of the sheet-like element (20), and coupling the free ends of the protruding elements (21) of each layer (3,4) to each other by means of respective finishing rollers (10,11) which engage and cool the smooth surfaces of the respective flat sheet-like element (20) of each layer in order to obtain an alveolar panel element provided with closed cells formed by the mutually facing and coupled perimetrically closed cavities of said protruding elements (21) mutually coupled at their free ends, and
- *wherein calibration rollers (31), keep the two layers mutually positioned after their passage through the finishing rollers.*

2. The method according to claim 1, **characterized in that** said cavities have a hexagonal shape.

3. The method according to claim 1, **characterized in that** said cavities are rhomboidal.

4. The method according to claim 1, **characterized in that** said cavities are substantially polygonal.

5. The method according to claim 1, **characterized in that** said cavities have a substantially circular shape.

6. The method according to one or more of the preceding claims, **characterized in that** said first and second layers (3,4) are subjected, after the shaping step, to a step for heating the free ends of said protruding elements (21) for mutual coupling with the protruding elements (21) of the layers (3,4) that are mutually coupled, by localized melting.

7. The method according to one or more of the preceding claims, **characterized in that** said protruding elements (21) have a cross-section which is substantially frustum-shaped and is wider on the side of said panel element (20).

8. The method according to one or more of the preceding claims, **characterized in that** a calibration step is performed in order to couple said layers (3,4) so as to stabilize the mutual fixing of the free ends of said protruding elements (21).

9. The method according to one or more of the preceding claims, **characterized in that** it provides for the insertion of an intermediate layer when said first and second layers (3,4) are coupled.

## Patentansprüche

1. Ein Verfahren zur Herstellung eines Alveolarplattenelements, insbesondere für Abdeckungen, Verpackungen, Stützflächen und dergleichen, das folgende Schritte umfasst:
- gleichzeitiges Extrudieren einer ersten Schicht (3) und einer zweiten Schicht (4) von thermoplastischem Material,
- gleichzeitiges Formen der ersten und zweiten Schichten (3, 4) durch Positionierung der ersten und zweiten Schichten (3, 4) auf entsprechenden Formwalzen (5, 6), von denen jede an ihrer Oberfläche mit Vertiefungen versehen ist, um so auf jeder Schicht (3, 4) ein flaches folienartiges Element (20) mit Elementen (21) bereitzustellen, die auf einer Fläche davon herausragen, und worin die Vertiefungen (7) dem Muster der herausragenden Elemente (21) entsprechen,
**gekennzeichnet durch**
- Gegenwalzen (8, 9), die zum Formen bereitgestellt werden, und
- worin die herausragenden Elemente (21) Vertiefungen bilden, die perimetrisch geschlossen und an der Fläche offen sind, die gegenüber dem Boden des folienartigen Elements (20) liegt, und Kopplung der freien Enden der herausragenden Elemente (21) jeder Schicht (3, 4) miteinander mit Hilfe entsprechender Endfertigungswalzen (10, 11), die in die glatten Oberflächen des entsprechenden flachen folienartigen Elements (20) jeder Schicht eingreifen und sie kühlen, um ein Alveolarplattenelement zu erhalten, das mit geschlossenen Zellen ausgestattet ist, die durch die einander gegenüberliegenden und gekoppelten perimetrisch geschlossenen Vertiefungen des herausragenden Elements (21) geformt sind, die an ihren freien Enden miteinander gekoppelt sind, und
- worin Kalibrierwalzen (31) die zwei Schichten nach ihrem Durchlauf **durch** die Endfertigungswalzen zueinander positioniert halten.

2. Das Verfahren gemäß Anspruch 1, **dadurch gekennzeichnet, dass** die Vertiefungen eine Sechseckform haben.

3. Das Verfahren gemäß Anspruch 1, **dadurch gekennzeichnet, dass** die Vertiefungen rautenförmig sind.

4. Das Verfahren gemäß Anspruch 1, **dadurch gekennzeichnet, dass** die Vertiefungen im Wesentlichen vieleckig sind.

5. Das Verfahren gemäß Anspruch 1, **dadurch gekennzeichnet, dass** die Vertiefungen im Wesentlichen kreisförmig sind.

6. Das Verfahren gemäß einem oder mehreren der obigen Ansprüche, **dadurch gekennzeichnet, dass** die erste und die zweite Schicht (3, 4) nach dem Formungsschritt einem Schritt zur Erhitzung der freien Enden der herausragenden Elemente (21) zur gegenseitigen Kopplung mit den herausragenden Elementen (21) der Schichten (3, 4) unterzogen werden, die miteinander gekoppelt werden, durch örtliches Schmelzen.

7. Das Verfahren gemäß einem oder mehreren der obigen Ansprüche, **dadurch gekennzeichnet, dass** die herausragenden Elemente (21) einen Querschnitt haben, der im Wesentlichen kegelstumpfförmig und auf der Seite des Panelelements (20) breiter ist.

8. Das Verfahren gemäß einem oder mehreren der obigen Ansprüche, **dadurch gekennzeichnet, dass** ein Kalibrierungsschritt durchgeführt wird, um die Schichten (3, 4) zu koppeln und so die gegenseitige Fixierung der freien Enden der herausragenden Elemente (21) zu stabilisieren.

9. Das Verfahren gemäß einem oder mehreren der obigen Ansprüche, **dadurch gekennzeichnet, dass** es das Einfügen einer intermediären Schicht ermöglicht, wenn die erste und die zweite Schicht (3, 4) gekoppelt werden.

## Revendications

1. Procédé de fabrication d'un élément de panneau alvéolaire, notamment pour revêtements, emballages, surfaces portantes et autres, comportant les étapes consistant à :
- extruder simultanément une première couche (3) et une seconde couche (4) de matière thermoplastique,
- façonner simultanément lesdites première et deuxième couches (3, 4) en plaçant lesdites première et seconde couches (3, 4) sur des cylindres de façonnage respectifs (5, 6) pourvus chacun, sur sa surface, d'évidements de manière à créer, sur chaque couche (3, 4) un élément plat en feuille (20) avec des éléments (21) qui font saillie sur une face de celui-ci, et lesdits évidements (7) correspondant à la combinaison desdits éléments saillants (21),
**caractérisé en ce que**
- des cylindres antagonistes (8, 9) servent au façonnage, et
- dans lequel lesdits éléments saillants (21) forment des cavités fermées sur leur pourtour et ouvertes sur la face située à l'opposé du dessous de l'élément en feuille (20), et les extrémités libres des éléments saillants (21) de chaque couche (3,4) sont reliées les unes aux autres par des cylindres finisseurs respectifs (10, 11) qui viennent contre et refroidissent les surfaces lisses de l'élément plat en feuille respectif (20) de chaque couche afin de réaliser un élément de panneau alvéolaire pourvu d'alvéoles fermées constituées par les cavités, fermées sur leur pourtour, en regard les unes des autres et reliées, desdits éléments saillants (21) réunis les uns aux autres au niveau de leurs extrémités libres, et :
- dans lequel des cylindres d'étalonnage (31) maintiennent les deux couches dans leurs positions l'une par rapport à l'autre après leur passage par les cylindres finisseurs

2. Procédé selon la revendication 1, **caractérisé en ce que** lesdites cavités ont une forme hexagonale.

3. Procédé selon la revendication 1, **caractérisé en ce que** lesdites cavités sont rhomboïdales.

4. Procédé selon la revendication 1, **caractérisé en ce que** lesdites cavités sont sensiblement polygonales.

5. Procédé selon la revendication 1, **caractérisé en ce que** lesdites cavités ont une forme sensiblement circulaire.

6. Procédé selon une ou plusieurs des revendications précédentes, **caractérisé en ce que** lesdites première et seconde couches (3, 4) subissent, après l'étape de façonnage, une étape pour chauffer les extrémités libres desdits éléments saillants (21) pour une liaison mutuelle, par fusion localisée, avec les éléments saillants (21) des couches (3, 4) qui sont réunies l'une à l'autre.

7. Procédé selon une ou plusieurs des revendications précédentes, **caractérisé en ce que** lesdits éléments saillants (21) ont une section transversale de forme sensiblement tronconique et plus large du côté dudit élément (20) de panneau.

8. Procédé selon une ou plusieurs des revendications précédentes, **caractérisé en ce qu'**une étape d'étalonnage est exécutée afin de réunir lesdites couches (3, 4) de manière à stabiliser la fixation mutuelle des extrémités libres desdits éléments saillants (21).

9. Procédé selon une ou plusieurs des revendications précédentes, **caractérisé en ce qu'**il permet l'insertion d'une couche intermédiaire lorsque lesdites première et seconde couches (3, 4) sont réunies.
